# EUROPÄISCHE PATENTSCHRIFT

(11) **EP 2 711 294 B1**
(45) Veröffentlichungstag und Bekanntmachung des Hinweises auf die Patenterteilung: **15.01.2020**
(21) Anmeldenummer: 13004399.5
(22) Anmeldetag: 10.09.2013
(51) Int. Cl.: B64D 11/00

(54) **Interaktive Passagierkabineneinheit und Verfahren zur Steuerung von Darstellungen darauf**
Passenger cabin unit and method for controlling the presentation of information therein
Cabine passagers et procédé de commande de l'affichage d'informations dans la cabine

(30) Priorität: 21.09.2012 DE 102012108956
(43) Veröffentlichungstag der Anmeldung: 26.03.2014
(73) Patentinhaber: Airbus Defence and Space GmbH, 85521 Ottobrunn (DE)
(72) Erfinder: Velten, Marc, 80798 München (DE); Meister, Daniel, 80797 München (DE); Schubotz, Réne, 81667 München (DE); Gärtner, Jens, 20359 Hamburg (DE)
(74) Vertreter: Kastel, Stefan

(56) Entgegenhaltungen:
- WO-A1-2007/093327
- WO-A2-2005/079309
- DE-A1-102006 007 285
- US-A1- 2011 162 016

## Beschreibung

Die Erfindung betrifft eine Passagierkabineneinheit eines Personentransportfahrzeugs, insbesondere ein Kabinensegment eines Flugzeugs, wobei im Inneren der Passagierkabineneinheit sichtbare Oberflächen zumindest zu einem großen Teil mit einer Displayeinrichtung zur Darstellung von visuellen Informationen, Effekten und Bildern versehen sind. Weiter betrifft die Erfindung ein Verfahren zum Darstellen von visuellen Effekten, Informationen und Bildern zur Unterhaltung und/oder zur Information von Passagieren innerhalb einer solchen Passagierkabineneinheit.

Kabinen von Personentransportfahrzeugen, wie z.B. Bussen, Luft- und Schienenfahrzeugen, sind derzeit gar nicht oder nur räumlich wie inhaltlich stark begrenzt, visuell-digital bespielbar oder gar interaktiv steuerbar. Es gibt bei praktisch auf dem Markt erhältlichen Fahrzeugen einzelne Monitore, die meist sehr klein unmittelbar vor den Passagieren angeordnet sind und die teilweise auch über eine Menüführung durch die Passagiere selbst in gewisser Weise steuerbar sind. Bisherige in der Praxis realisierte Lösungen zielen nur auf plane Flächen ab. Gekrümmte Flächen sind bisher ausgeklammert.

Derzeitige Kabinen und Kabinenkonzepte verfügen nur über räumlich begrenzte (nur Monitore), eingeschränkte (z.B. nur plane Flächen) Möglichkeiten der Übertragung digitaler Bildinhalte und sind nur stark eingeschränkt interaktiv.

Aus der US 7 070 150 B2 und der US 2011/0163697 A1 ist es bekannt, einzelne Bereiche einer Flugzeugkabine mit Beleuchtungsflächen oder virtuellen Fensterflächen auf Displayeinrichtungen zu versehen.

Aus der DE 10 2007 008 164 A1 ist ein Verfahren und eine Vorrichtung zur Beleuchtungsanpassung an eine Bilddarstellung auf eine Fahrzeuginnenraumfläche bekannt, bei der selbst leuchtende Displays, beispielsweise in OLED-Technologie, ausgeführt werden.

Aus der DE 10 2006 007 285 A1 ist es bekannt, im Innenraum der Passagierkabine eines Luftfahrzeuges Verkleidungspaneele anzuordnen, wobei auch bewölbte Flächen mit einem Display zur Wiedergabe von Informationen beschichtet werden. Hierbei werden insbesondere Deckenbereiche, also ein Flugzeughimmel eines Innenraums der Flugzeugpassagierkabine mit einem flexiblen Display ausgestattet.

Aufgabe der Erfindung ist es, eine Passagierkabineneinheit der in der DE 10 2006 007 285 A1 gezeigten Art hinsichtlich Bedienkomfort und funktionaler Möglichkeiten weiter zu verbessern. Diese Aufgabe wird durch eine Passagierkabineneinheit gemäß Anspruch 1 sowie ein Verfahren gemäß dem Nebenanspruch 11 gelöst.

Vorteilhafte Ausgestaltungen der Erfindung sind Gegenstand der Unteransprüche. Die Erfindung schafft eine Passagierkabineneinheit eines Flugzeugs, wobei vom Inneren der Passagierkabineneinheit sichtbare Oberflächen der Passagierkabineneinheit, nämlich sichtbare Oberflächen des Flugzeughimmels und der Seitenwände, vollflächig oder zum größten Teil mit einer Displayeinrichtung zur Darstellung von visuellen Informationen, Effekten und Bildern versehen sind, wobei die Displayeinrichtung in mehrere erste Anzeigebereiche, die jeweils einzelnen Passagieren oder einer Gruppe von Passagieren zugeordnet sind, und wenigstens einen zweiten Anzeigebereich unterteilt ist, wobei jeder erste Anzeigebereich eine Passagierbefehlseingabeeinrichtung hat, mittels der ein Passagier die visuelle Darstellung auf dem ihm zugeordneten ersten Anzeigebereich steuern kann, wobei die Passagierkabineneinheit als interaktive Kabine ausgebildet ist, wobei die interaktive Kabine aus einer interaktiven Verkleidung als der zweite Anzeigenbereich und einem interaktiven Interieur gebildet ist, wobei das interaktive Interieur durch die ersten Anzeigebereiche gebildet ist, wobei die interaktive Verkleidung und das interaktive Interieur unabhängig voneinander ansteuerbar sind, wobei die interaktive Verkleidung nur durch das Flugpersonal ansteuerbar ist, wobei das interaktive Interieur (44) einerseits durch Passagiere und andererseits durch Flugpersonal ansteuerbar ist, wobei die durch die einzelnen Passagiere ansteuerbaren ersten Anzeigebereiche das interaktive Interieur im Bereich der Seitenwände, die sich nahe der Passagiersitze befinden, bilden, wobei jeder erste Anzeigebereich einen gesonderten Informationsbereich umfasst, wobei jeder erste Anzeigebereich derart ausgebildet ist, dass es dem Passagier durch entsprechende Befehle möglich ist, Informationen zwischen seinem gesonderten Informationsbereich vor sich an der Rücklehne des Vordersitzes und seinem Bereich auf dem interaktiven Interieur hin- und herzuschieben, und wobei wenigstens eine Personalbefehlseingabeeinrichtung vorgesehen ist, mittels der Begleitpersonal die visuelle Darstellung auf mehreren oder allen ersten Anzeigebereichen und auf dem zweiten Anzeigebereich steuern kann.

Es ist bevorzugt, dass die Passagierbefehlseingabeeinrichtung zur Erfassung von Befehlen durch Berührung, Gesten oder Sprache ausgebildet ist.

Es ist bevorzugt, dass die erste Anzeigeeinrichtung über ihre gesamte Oberfläche derart interaktiv ausgebildet ist, dass Befehle durch Berührungen oder Annäherungen oder Bewegungen an jedem Flächenbereich der Anzeigeeinrichtung erfassbar sind.

Es ist bevorzugt, dass jeder erste Anzeigebereich eine Berührungs- oder Bewegungserfassungsfunktionseinrichtung aufweist, die ein Zeichnen oder Malen oder Beschriften der Anzeigeeinrichtung durch Berühren oder Gesten ermöglicht.

Es ist bevorzugt, dass sowohl plane als auch gekrümmte Oberflächen vollflächig mit der Displayeinrichtung versehen sind.

Es ist bevorzugt, dass die zentrale Personalbefehlseingabeeinrichtung dazu ausgebildet ist:
a) einen visuellen Oberflächeneindruck in Farbe, Anordnung, Aussehen oder Lichtstärke oder dergleichen an der gesamten Innenwand der Passagierkabineneinheit oder eines Teils davon zentral zu verändern; und/oder
b) allen oder einem Teil der Passagiere Informationen auf den ersten und/oder den zweiten Anzeigebereichen zu übermitteln, und/oder
c) Signale und/oder Information auf ausgewählten ersten Anzeigebereichen darzustellen.

Es ist bevorzugt, dass die Passagierbefehlseingabeeinrichtung dazu ausgebildet ist,
d) im zugeordneten Anzeigebereich ein visuell als Bild dargestelltes Fenster mit einer Außenansicht darzustellen; und/oder
e) im zugeordneten Anzeigebereich ein visuell als Bild dargestelltes Fenster mit einer Außenansicht und eingeblendeter Zusatzinformation darzustellen; und/oder
f) auf dem Anzeigebereich einen Hintergrundeffekt aus mehreren Optionen ausgewählt darzustellen;
g) insbesondere durch Berühren oder Gesten Skizzen oder Zeichnungen oder Gemälde zu erstellen.

Es ist bevorzugt, dass die ersten Anzeigebereiche an Oberflächen unmittelbar vor und neben Passagiersitzen angeordnet sind und dass der zweite Anzeigebereich durch die verbleibenden Oberflächen an Seitenwänden und den Deckenbereich gebildet ist.

Es ist bevorzugt, dass die Displayeinrichtung derart ausgebildet ist, dass Befehle der Personalbefehlseingabeeinrichtung immer höherrangig als Befehle der Passagierbefehlseingabeeinrichtungen behandelt werden.

Es ist bevorzugt, dass erste Anzeigebereiche eine gesonderte persönliche Informationsfläche unmittelbar vor einem Passagiersitz und großflächige sonstige Anzeigeoberflächen in der Umgebung des Passagiersitzes aufweisen, wobei die Informationsfläche zur Darstellung mit größerer Auflösung und/oder mit größerem Informationsinhalt und mit mehr interaktiven Steuerungsmöglichkeiten als die sonstigen Anzeigeoberflächen ausgebildet ist.

Weiter schafft die Erfindung ein Verfahren zum Darstellen von visuellen Effekten, Informationen und Bildern zur Unterhaltung und/oder Information von Passagieren eines Flugzeugs, mit: Darstellen von visuellen Informationen, Effekten und Bildern auf einer Displayeinrichtung, die vollflächig oder zum größten Teil auf vom Inneren der Passagierkabineneinheit sichtbaren Oberflächen einer Passagierkabineneinheit, nämlich sichtbaren Oberflächen des Flugzeughimmels und der Seitenwände, bereitgestellt wird; Unterteilen der Displayeinrichtung in mehrere erste interaktive Anzeigebereichen, die jeweils einzelnen Passagieren oder einer Gruppe von Passagieren zugeordnet werden und einzeln durch die zugeordneten Passagiere interaktiv bedienbar sind, und in zweite Anzeigebereiche; Steuern der ersten Anzeigebereiche über an den ersten Anzeigebereichen vorgesehenen Berührungs-, Gesten- oder Spracherfassungseinrichtungen durch die einzelnen Passagiere; und Steuern der ersten Anzeigebereiche und des zweiten Anzeigebereichs durch Bedienpersonal, Ausbilden der Passagierkabineneinheit als interaktive Kabine, wobei die interaktive Kabine aus einer interaktiven Verkleidung als der zweite Anzeigenbereich und einem interaktiven Interieur gebildet ist,
wobei das interaktive Interieur durch die ersten Anzeigebereiche gebildet ist, wobei die interaktive Verkleidung und das interaktive Interieur unabhängig voneinander ansteuerbar sind, wobei die interaktive Verkleidung nur durch das Flugpersonal ansteuerbar ist, wobei das interaktive Interieur einerseits durch Passagiere und andererseits durch Flugpersonal ansteuerbar ist,
wobei die durch die einzelnen Passagiere ansteuerbaren ersten Anzeigebereiche das interaktive Interieur im Bereich der Seitenwände, die sich nahe der Passagiersitze befinden, bilden, wobei jeder erste Anzeigebereich einen gesonderten Informationsbereich umfasst,
wobei es dem Passagier durch entsprechende Befehle möglich ist, Informationen zwischen seinem gesonderten Informationsbereich vor sich an der Rücklehne des Vordersitzes und seinem Bereich auf dem interaktiven Interieur hin- und herzuschieben.

Eine bevorzugte Ausgestaltung schafft insbesondere eine vollflächig visuell-digital bespielbare und interaktiv ansteuerbare Kabine oder Kabinenoberfläche.

Vorzugsweise wird gegenüber herkömmlichen Passagierkabinen die Trennung von passiven Flächen und aktiven oder interaktiven Flächen in der Kabine aufgehoben, um so den Komfort von Crew und Passagieren zu steigern und die funktionalen Möglichkeiten zu steigern. Insbesondere können die funktionalen Möglichkeiten zum Betrieb der Passagierkabine, bei der Fluggastbetreuung, bei Passagierunterhaltungsequipment (IFE - "In Flight Entertainment") und bei der Sicherheit erhöht werden.

Eine bevorzugte Ausgestaltung der Erfindung zeichnet sich durch die Aufhebung der Trennung von passiven Flächen und aktiven/interaktiven Flächen sowie von planen und gekrümmten Flächen in der Kabine aus. Dazu wird die Kabinenfläche als komplett interaktives und mit digitalen Inhalten bespielbarer Raum verstanden und vollflächig, z.B. mittels OLED-Technologie, ausgelegt. Eine Bespielbarkeit ist dabei gleichermaßen auf planen wie auf gekrümmten Flächen vorgesehen und möglich. Die Interaktion kann über Tast-/Sprach-/Gesten-Steuerung erfolgen.

Das visuelle Design - wie insbesondere Farbe, Anordnung, Charakter, Lichtstärke usw. - der Kabine oder von Teilen der Kabine kann in Sekunden digital geändert werden. Hierzu können beispielsweise unterschiedlich vorgespeicherte Varianten umgeschaltet werden.

Es können unterschiedliche Fenster erzeugt werden. Beispielsweise können Informationsfenster erzeugt werden, die bestimmte Informationen oder sonstige Inhalte darstellen, andererseits können auch virtuelle Außenfenster, die auch bei fensterlosen Kabinen die Möglichkeit des Blicks nach außen simulieren, erzeugt werden. Sämtliche Fenster können in der Größe änderbar sein, in der Position verschiebbar sein und ihre Inhalte sind austauschbar. Beispielsweise können Fenster eine Außenansicht darstellen; es können auch Hintergrundeffekte - "Wall Paper-Ansichten" - erzeugt werden.

Bei den ersten Anzeigebereichen, die sich vorzugsweise im Nahbereich eines Passagiersitzes befinden, können die Passagiere auf diesem Sitz selbst interaktiv an den Anzeigebereichen ihre bevorzugte Darstellung wählen oder auswählen. Die zweiten Anzeigebereiche können durch das Begleitpersonal, wie beispielsweise Flugbegleiter (auch kurz FA für Flight Attendants genannt) eingestellt werden. Das Personal kann auch zentral Anzeigen auf den ersten Anzeigebereichen beeinflussen oder mit Inhalten füllen.

Beispielsweise kann in der Gesamtkabine ein Designeffektmodus geändert werden. Es lässt sich beispielsweise eine Standardkabine darstellen. Hierzu werden beispielsweise transparente OLEDs verwendet, die bei Nichtfunktion die Hintergrundoberflächen sichtbar werden lassen. Es können Farbübergänge dargestellt werden; es kann auch eine "kristalline" Kabine dargestellt werden.

Weiter sind Zusatzfunktionen wie z.B. Hinweise oder Notfallzeichen zuschaltbar, wobei durch die Auskleidung der Kabine diese Hinweise zum richtigen Zeitpunkt am richtigen Ort dargestellt werden können. Beispielsweise könnten so durch entsprechende Hinweispfade im Notfall die Notausgänge und der kürzeste Weg von jedem Passagiersitz zum jeweils nächsten Notausgang dargestellt werden. Dadurch kann die Displayeinrichtung insbesondere als Leitsystem für Notfälle genutzt werden.

Vorzugsweise wird eine interaktive Kabine geschaffen, wobei ein interaktives Interieur im Bereich der Passagiere die ersten Anzeigebereiche bilden, die durch die Passagiere beeinflussbar sind und ein interaktives Lining, beispielsweise im Deckenbereich oder im oberen Seitenbereich der Kabine, den oder die zweiten Anzeigebereich(e) bilden.

Ausführungsbeispiele der Erfindung werden im Folgenden anhand der beigefügten Zeichnungen näher erläutert. Darin zeigen:
- Fig. 1: eine erste perspektivische Ansicht eines Ausschnitts einer Passagierkabine eines Flugzeugs;
- Fig. 2: eine zweite perspektivische Ansicht der Passagierkabine, wobei Innenbereiche deutlicher gezeigt sind;
- Fig. 3: eine weitere perspektivische, schematische Darstellung mit Darstellung durch die Passagiere (interaktive Fensterflächen) sowie von zweiten Anzeigebereichen (interaktives Lining);
- Fig.4 und Fig. 5: ein Beispiel einer Darstellung von unterschiedlichen visuellen Effekten auf den ersten Anzeigebereichen und den zweiten Anzeigebereichen; und
- Fig. 6: eine Blockdarstellung zur Darstellung der Bedienerrechte für Kabinenpersonal einerseits und Passagiere andererseits.

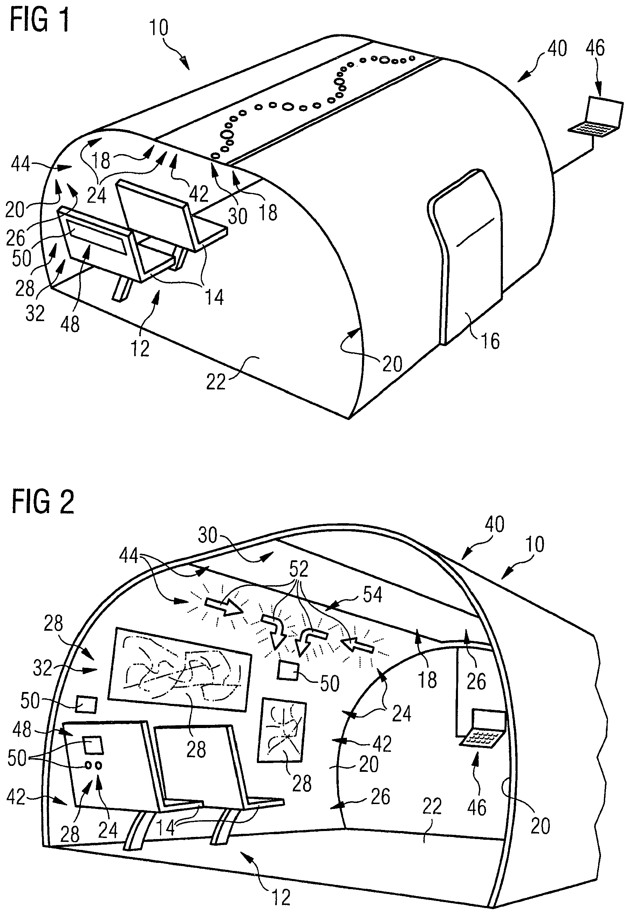

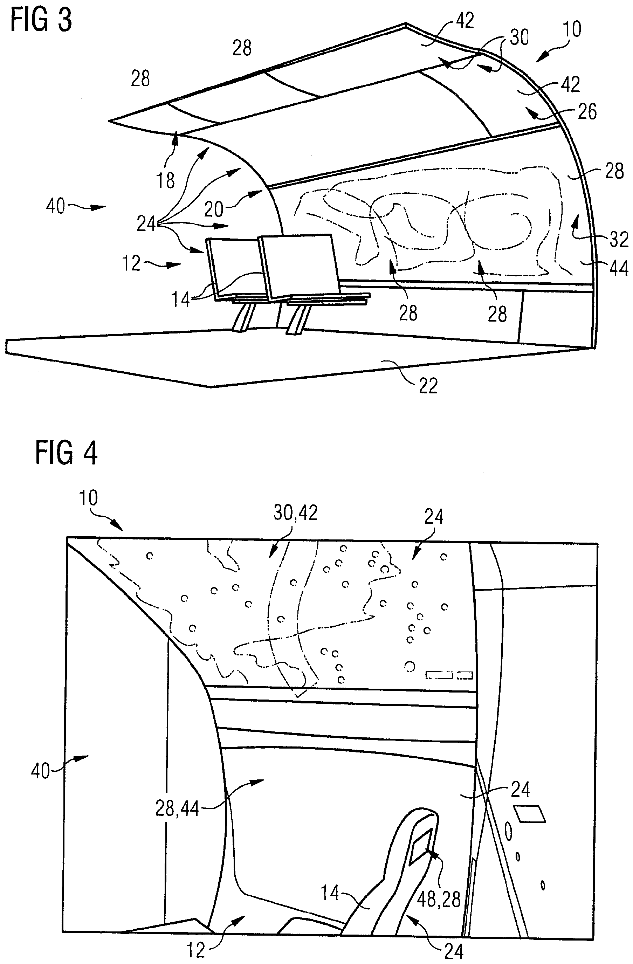

In den Fig. 1 bis 5 ist eine Passagierkabineneinheit 10 eines Flugzeuges in Form eines Kabinensegments oder eines Ausschnitts einer Kabine des Flugzeuges dargestellt. Die Passagierkabineneinheit 10 weist einen Passagierbereich 12 mit Passagiersitzen 14 auf. Dieser Passagierbereich ist durch einen Eingang 16 zugänglich. Der Passagierbereich 12 weist einen Flugzeughimmel 18, Seitenwände 20 und einen Boden 22 auf, auf dem die Passagiersitze 14 verankert sind.

Die Seitenwände 20 sowie der Flugzeughimmel 18 sind vollflächig mit einer Displayeinrichtung 24 verkleidet, mit der sich auf den den Passagieren auf den Passagiersitzen 14 zugewandten Innenflächen 26 visuelle Effekte, Bilder oder Informationen darstellen lassen. Derartige Displayeinrichtungen 24 sind vom Grundsatz her aus der DE 10 2006 007 285 A1 oder der DE 10 2007 008 164 A1 bekannt. Anders als bei den vorbekannten Passagierkabineneinheiten ist jedoch die hier dargestellte Passagierkabineneinheit 10 entlang der gesamten Innenfläche 26 mit der Displayeinrichtung 24 versehen.

Die Displayeinrichtung 24 ist unterteilt in mehrere erste Anzeigebereiche 28, die im Nahbereich der Passagiersitze 14 oder auch - hier nicht näher dargestellt - z.B. auf den Rückflächen der Lehnen der Passagiersitze 14 ausgebildet sind, und in einen zweiten Anzeigebereich 30, der beispielsweise am Flugzeughimmel 18 und im oberen Bereich der Seitenwände 20 ausgebildet ist.

Die ersten Anzeigebereiche 28 weisen jeweils Passagierbefehlseingabeeinrichtungen 32 auf, mit denen die auf den Passagiersitzen 14 befindlichen Passagiere die Anzeigen auf den ersten Anzeigebereichen 28 mittels Taststeuerung, Gestensteuerung oder Sprachsteuerung steuern können.

Hierzu sind die ersten Anzeigebereiche 28 insbesondere derart ausgebildet, dass sie entlang ihrer gesamten Fläche durch Berührungen oder Annäherungen oder kamerabasiert sensitiv sind, um so intuitiv visuell dargestellte Objekte auf der Fläche des ersten Anzeigebereiches 28 verschieben, in der Größe oder Darstellung verändern, drehen oder sonst wie beeinflussen zu können.

Entsprechende Techniken sind für interaktive Anzeigeflächen, z.B. bei Tablet-PCs oder bei Mobiltelefonen, bereits Standard und somit vom Grundsatz her bekannt. Für weitere Einzelheiten zur möglichen Gestaltung des ersten Anzeigebereichs 28 als vollflächig interaktive Passagierbefehlseingabefläche wird auf die Techniken verwiesen, wie sie in der US 8 072 437 B2, der US 2012/146953 A1, der US 2012/154319 A1, der WO 2010/123779 A2 oder der WO 2012/070949 beschrieben und gezeigt sind; der Inhalt dieser Druckschriften wird hiermit durch Bezugnahme inkorporiert.

In den Darstellungen der Fig. 1 bis 5 ist auf dem zweiten Anzeigebereich 30 ein visueller Effekt, beispielsweise ein blauer Himmel mit Wolken, dargestellt, um so den Komfort aller Passagiere zu erhöhen, wobei auf den ersten Anzeigebereichen 28 die Passagiere auch individuell ihre nähere Umgebung entsprechend gestalten können. Zum Beispiel können hier Fenster erzeugt und geöffnet werden, die unterschiedliche Inhalte darstellen. Dadurch können auch Außenfenster simuliert werden.

Insgesamt lässt sich damit eine interaktive Kabine 40 gestalten, die aus den Komponenten interaktive Verkleidung (interactive lining) als zweiter Anzeigebereich 30 und interaktives Interieur 44 gebildet ist, das durch die mehreren ersten Anzeigebereiche 28 gebildet worden ist. Beide Komponenten 42, 44 sind unabhängig voneinander ansteuerbar. Das interaktive Interieur 44 mit den ersten Anzeigebereichen 28 ist einerseits durch Passagiere und andererseits durch Flugpersonal ansteuerbar. Die interaktive Verkleidung 42 mit dem zweiten Anzeigebereich 30 ist nur durch das Flugpersonal ansteuerbar.

Hierzu ist z.B. in einem nicht allgemein zugänglichen Bereich (Personalbereich oder Crewbereich, z .B. Cockpit, Küche, FA-Sitzbereich) oder sonst wie - beispielsweise durch Personenidentifikationseinrichtungen - im Zugriff beschränkt eine Personalbefehlseingabeeinrichtung 46 vorgesehen, über die die Displayeinrichtung 24 insgesamt steuerbar ist. Die Personalbefehlseingabeeinrichtung 46 kann in einem Ausführungsbeispiel ortsfest angeordnet sein. In einem weiteren Ausführungsbeispiel können Mitglieder des Personals aber auch mit einer mobilen persönlichen Kommunikations- und Steuereinrichtung - ähnlich wie Pads oder Tablet-PCs oder Smartphones oder Pager oder dergleichen - ausgerüstet sein, die eine Funktion als Personalbefehlseingabeeinrichtung 46 haben, so dass die Displayeinrichtung 24 auch über mobile Crew-Geräte steuerbar ist.

Somit kann das interaktive Interieur 44 mit den ersten Anzeigebereichen 28 sowohl durch die Passagiere als auch das Personal angesteuert werden. Die interaktive Verkleidung 42 mit dem zweiten Anzeigebereich 30 kann nur durch das Personal angesteuert werden. Weiter können beide Komponenten 42, 44 auch in Kombination - nur durch das Personal - angesteuert werden.

Wie oben bereits erwähnt, sind in einem Ausführungsbeispiel auch zumindest Teile der rückseitigen Oberflächen der Rücklehnen der Passagiersitze 14 als interak tive, digital bespielbare und durch Berührungen, Gesten oder Sprache ansteuerbare erste Anzeigebereiche 28 ausgebildet. Diese Teile der Displayeinrichtung 24 sind durch die Passagiere auf den Sitzen in der Reihe dahinter besonders gut einsehbar und als gesonderte Informationsbereiche 48 vorgesehen, wo mehr Informationen abrufbar sind und mehr Funktionen zur Interaktion durch die Passagiere gegeben sind als an dem interaktiven Interieur 44. Dieser gesonderte Informationsbereich 48 ist insbesondere als Inflight-Entertainment-System (IFE) nutzbar. Hier können beispielsweise Spielfilme abgespielt werden oder der Passagier kann Computerspiele oder dergleichen spielen, ohne die anderen Passagiere zu stören. In einem Beispiel sind hierzu die Rücklehnen mit interaktiver OLED-Technik verkleidet. In einem anderen Ausführungsbeispiel sind zum Vorsehen des gesonderten Informationsbereichs 48 an den Rückseiten der Passagiersitze 14 Kommunikations- und Informationsgeräte (oder "Personal Devices") der Passagiere anbringbar. Dies können die grundsätzlich bereits bekannten und im Einsatz befindliche installierte interaktive Monitore sein, die als IFE und hier zusätzlich als die gesonderten Informationsbereiche 48 nutzbar sind, oder diese Geräte sind persönliche Geräte der Passagiere oder zur Verfügung gestellte mobile Geräte wie Tablet-PCs oder Pads oder Smartphones, die mit der Kabine z.B. drahtlos kommunizieren und z.B. in Aufnahmen an der Rücklehne der Vordersitze gehalten werden können. In jeder der Ausführungsbeispiele könnte der Passagier durch entsprechende Befehle Informationen zwischen seinem IFE oder "Personal Device" - allgemeiner zwischen seinem gesonderten Informationsbereich 48 vor sich an der Rücklehne des Vordersitzes - und seinem Bereich auf dem interaktiven Interieur 44 hin- und her schieben, wobei er weitere Inhalte und Informationen und weiterführende Funktionen - z.B. Tastaturen zur Texteingabe - auf dem seinen gesonderten Informationsbereich 48 darstellenden IFE oder "Personal Device" - sei dies eine interaktive OLED-Verkleidung der Rücklehne des Vordersitzes, sei dies ein fest installierter interaktiver Monitor, sei es ein mobiles Gerät wie Pad, Smartphone oder Tablet-Gerät oder sonstiges, abrufen und ansteuern kann.

Die durch die einzelnen Passagiere ansteuerbaren ersten Anzeigebereiche 28 umfassen somit das interaktive Interieur 44 im Bereich der Seitenwände 20, die sich nahe der Passagiersitze 14 befinden, und den gesonderten Informationsbereich 48 mit dem Inflight-Entertainment-System IFE.

Weiter lassen sich auf allen Anzeigebereichen 28, 30 virtuelle Informationsfenster ("virtual i-window") 50 darstellen. Das interaktive Informationsfenster 50 hat eine Sonderstellung und ist beiden Komponenten interaktive Verkleidung 42 und interaktives Interieur 44 zugeordnet. Es ist unabhängig oder in Wechselwirkung (Kommunikation zwischen Passagier und Personal und umgekehrt; Bridge-Funktion) durch das Personal und die Passagiere ansteuerbar.

Das virtuelle Informationsfenster 50 kann z.B. in die interaktive Verkleidung 42 eingeblendet oder graphisch verschmolzen werden. Dies geschieht vorzugsweise allein durch das Personal.

Andererseits können z.B. Inhalte des virtuellen Informationsfensters 50 für eine umfangreichere oder direkte Interaktion durch Passagiere in deren gesonderten Informationsbereich 48 gezogen werden. Dies kann beispielsweise durch eine entsprechende Gestik oder durch Berührungen intuitiv erfolgen.

Genauso können Informationen aus dem gesonderten Informationsbereich 48 durch Passagiere aus derem gesonderten Informationsbereich 48 zu dem Bereich des interaktiven Interieurs 44 gezogen werden. So haben Passagiere beispielsweise die Möglichkeit, Photos, Spielfilmszenen, Effekte aus Computerspielen oder sonstige für sich interessante Inhalte zu vergrößern, um sie mitfliegenden weiteren Personen auf dem interaktiven Interieur 44 zu zeigen.

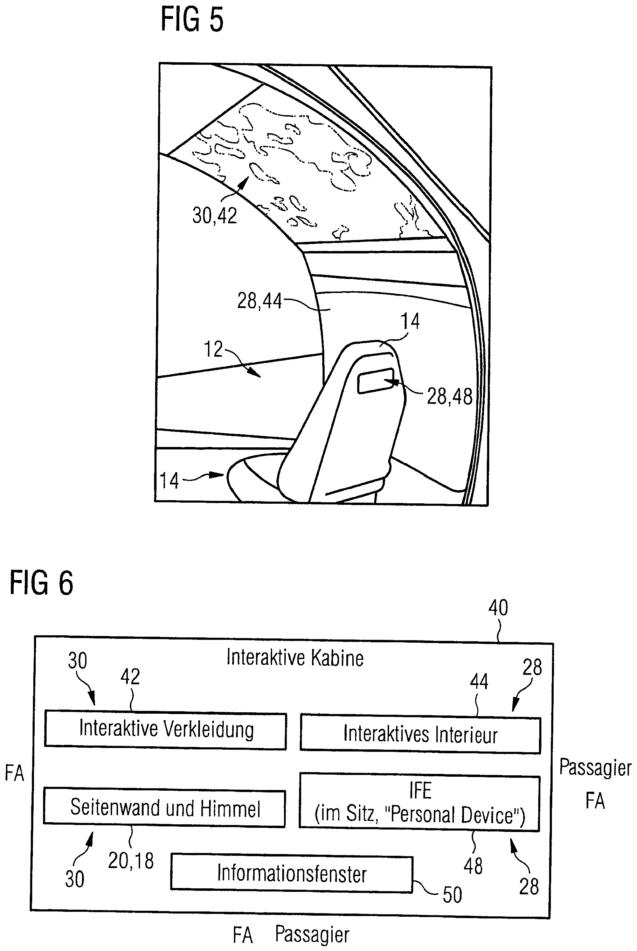

Die oben genannten Möglichkeiten der Bedienung der interaktiven Kabine 40 sind in Fig. 6 als Blockdarstellung visualisiert.

Die Displayeinrichtung 24 ist durch zentrale Steuereinrichtungen entsprechend ansteuerbar, wie dies in größerem Detail bereits in der DE 10 2006 007 285 A1 beschrieben worden ist.

Bei der hier dargestellten interaktiven Kabine 40 sind jedoch gegenüber dem bekannten System die Funktionalitäten und die Darstellmöglichkeiten erheblich erweitert.

Die Displaysteuerung wird vorzugsweise durch entsprechende Software in ihre Funktionalität programmiert, so dass die folgenden Zugriffsmöglichkeiten und Funktionalitäten entstehen können.

Zunächst wird auf die Möglichkeiten der Ansteuerung durch die Passagiere näher eingegangen.

Der Zugriff der Passagiere wird nur entsprechend eingeschränkt ermöglicht. Hier ist beispielsweise kein Zugriff auf die Gesamtkabine vorgesehen. Der Zugriff ist nur auf ein eigenes "Fenster" bzw. ein eigenes zugewiesenes Fenster-Raster möglich. Diese einzelnen Fenster oder Fenster-Raster bilden die unterschiedlichen ersten Anzeigebereiche 28.

Ein Passagierzugriff erfolgt z.B. immer im Slave-Modus, der Zugriff des Personals ist hierarchisch übergeordnet.

Dem Passagier werden folgende Funktionen für sein eigenes Fenster, d.h. für seinen eigenen ersten Anzeigebereich 28, eingeräumt.
- Der Passagier kann das eigene Fenster öffnen oder schließen oder prozentual öffnen.
- Der Passagier kann ein eigenes Fenster innerhalb seines ersten Anzeigebereichs 28 (im Raster des dem Passagier zugewiesenen Fenster-Rasters) verschieben.
- Der Passagier kann die Größe des Fensters öffnen oder skalieren - innerhalb seines zugeordneten ersten Anzeigebereichs 28.
- Der Passagier kann die Anzeigemodi des eigenen Fensters oder des eigenen ersten Anzeigebereichs 28 ändern. Beispielsweise kann er eine Außenansicht erzeugen oder unterschiedliche Hintergrundeffekte erzeugen oder er kann einen Wallpaper-Modus mit unterschiedlichen Hintergründen anwählen.
- Der Passagier kann Zusatzfunktionen einblenden als skalierbares neues Fenster.
- Der Passagier kann Zusatzfunktionen in ein bestehendes Fenster überblenden. Zum Beispiel kann ein Außenfenster mit geographischen Informationen erzeugt werden, die Städte oder sonstige interessante Punkte innerhalb der virtuellen Außenansicht anzeigen ("Google Earth-Modus").
- Der Passagier kann Fensterinhalte von seinem entsprechenden ersten Anzeigebereich 28 auf dem interaktiven Interieur 44 auf seinen gesonderten Informationsbereich 48, also insbesondere auf sein persönliches IFE - beispielsweise ausgebildet als gesondertes Display im Sitz -, "ziehen". Auf dem gesonderten Informationsbereich 48 stehen dann umfangreichere und detaillierte Zugriffe auf die interaktiven Inhalte zur Verfügung.

Bei unterschiedlichen Ausführungsformen der Passagierkabineneinheit 10 können alle oder auch nur einige der vorgenannten Funktionalitäten für die Passagiere verwirklicht sein.

Weiter wird die Steuerung der Displayeinrichtung 24 in bevorzugter Ausgestaltung - beispielsweise durch entsprechende Soft- oder Hardware - derart ausgebildet, dass das Personal, also insbesondere die Crew eines Passagierflugzeuges (Flight Attendants, kurz auch FA) uneingeschränkten Zugriff auf die Displayeinrichtung 24, beispielsweise gestaltet wie Administratorrechte, erhält.

Das Personal hat Zugriff auf die Gesamtkabine und auch Zugriff auf einzelne Fenster bzw. Fenstergruppen und somit beispielsweise auf einzelne erste Anzeigebereiche 28 oder auch auf gruppierte erste Anzeigebereiche 28 (z.B. linke Seite, rechte Seite). Befehle des Personals sind z.B. gegenüber Befehlen von Passagieren hierarchisch übergeordnet, d.h. das Personal hat Zugriff im Master-Modus. Vorzugsweise sind alle oder einige der folgenden Funktionsoptionen für das Personal verwirklicht:
- Das Personal kann alle Fenster, einzelne Fenster oder Fenstergruppen, alle erste Anzeigebereiche 28, einzelne erste Anzeigebereiche oder Gruppen von ersten Anzeigebereichen 28 - insbesondere gemäß den folgenden Punkten - ansteuern. Es kann weiter auch den zweiten Anzeigebereich 30 ansteuern. Das Personal kann alle Anzeigebereiche 28, 30 oder eine Gruppe von Anzeigebereichen 28, 30 oder einzelne Anzeigebereiche 28, 30 öffnen, schließen oder prozentual öffnen.
- Das Personal kann die Position der Fenster verschieben auf die 0-Position.
- Das Personal kann die Größe von Fenstern ändern oder skalieren.
- Das Personal kann Modi von aktiven oder offenen Fenstern ändern. Zum Beispiel kann von dem Modus Außenansicht auf bestimmte Wall Paper-Hintergrundeffekte gewechselt werden und umgekehrt.
- Das Personal kann Zusatzfunktionen einblenden als skalierbares neues Fenster.
- Das Personal kann Zusatzfunktionen in bestehenden Fenstern überblenden. Zum Beispiel können Ortsinformationen oder dergleichen ("Google Earth-Modus") angesteuert werden. Zum Beispiel kann auch ein Notfallmodus angesteuert werden, in dem Informationen im Notfall angezeigt werden.
- Das Personal kann den Modus der Gesamtkabine ändern, beispielsweise kann eine Standardkabine dargestellt sein, es können Farbübergänge angesteuert werden oder es können Hintergrundeffekte angesteuert werden.

In einer besonders bevorzugten beispielhaften Ausgestaltung kann das Personal auf der Displayeinrichtung 24, vorzugsweise auf allen Anzeigebereichen Informationen für den Notfall anzeigen. Wie beispielhaft in Fig. 2 angedeutet, können an den passenden Stellen in der passenden Orientierung blinkende Pfeile 52 angezeigt werden. Z.B. können Fluchtwege und Rettungswege durch entsprechende Symbole, wie Pfeile 52 und/oder Pfade, die auf den Anzeigebereichen 28, 30 dargestellt werden, angezeigt werden. Hierdurch lässt sich die interaktive Kabine 40 auch als Notfall-Leitsystem 54 nutzen. Die Displayeinrichtung 24 ist entsprechend zur Nutzung als Notfall-Leitsystem 54 ausgebildet.

Die Passagiere können für ihre aktiven Fenster und ihre eigenen ersten Anzeigebereiche 28 unter unterschiedlichen Anzeigemodi wählen.

Beispiele, aus denen die Passagiere für ihre eigenen Fenster oder Fenster-Raster und ihre eigenen ersten Anzeigebereiche 28 wählen können, umfassen:
- Außenansicht
- Außenansicht mit einblendbarer Zusatzinfo (z.B. Punkt von Interesse (PUI), Städtenamen)
- Hintergrundeffekte oder Wallpaper-Optionen; Beispiele:
   - Farbfläche; diese kann unbewegt oder bewegt sein; die Farbfläche kann leuchten; es können unterschiedliche Farben oder auch Farbwechsel angewählt werden;
   - Aquarium;
   - Regenwald/Herbstwald/Winterlandschaft/Wüste;
   - usw.
- Option Zeichnen oder "Malen": Das Fenster dient als digitale Malfläche z.B. für Kinder oder Eltern.

Um letztere Option zu ermöglichen, ist insbesondere der erste Anzeigebereich 28, vorzugsweise im Bereich des interaktiven Interieurs 44 oder auch im Bereich des gesonderten Informationsbereichs 48 derart ausgebildet, dass Berührungen mit dem Finger (oder mit einem Stock, Stab, Stift usw.) oder Annäherungen und Bewegungen nahe der Anzeigeoberfläche zu Strichen an der Anzeigeoberfläche führen. Durch näheres Annähern oder weiteres Entfernen können die Striche dicker oder dünner gezeichnet werden; es können auch Flächen umrandet und dann farblich gestaltet werden usw.

Vorzugsweise an der Personalbefehlseingabeeinrichtung 46 kann das Personal auch unter unterschiedlichen Anzeigemodi für die ersten Anzeigebereiche 28 oder den zweiten Anzeigebereich 30 wählen. Beispielsweise kann ein gemeinsamer Zugriff auf aktive Fenster am interaktiven Interieur 44 und auf die interaktive Verkleidung 42 erfolgen. Das Personal kann insbesondere aus allen Passagierfunktionen, wie oben aufgelistet, wählen.

Weiter ist bei bevorzugter Ausgestaltung auch ein Notfallmodus für das Personal auswählbar. Zum Beispiel können in einem Notfallmodus Pfeile dargestellt werden, die in Richtung der Tür - z.B. Eingang 16 - blinken.

Es kann unter unterschiedlichen Schlaf-, Nacht- oder Aufwach-Modi gewählt werden. Fensterinhalte können so generell dunkler oder heller angezeigt werden, es sind Farbwechsel erreichbar usw.

Um entsprechenden Wechsel zwischen den Schlaf-, Nacht- und Aufwach-Modi zu ermöglichen, erfolgt der Zugriff des Personals vorzugsweise immer im Master-Modus.

Für die Darstellung der Gesamtkabine oder der gesamten interaktiven Verkleidung 42 kann das Personal insbesondere aus den folgenden Modi wählen:
- Gesamtkabine-Modi ändern - beispielsweise zwischen Standardkabine, Farbübergänge, Hintergrundeffekt-Modi oder Wallpaper-Modi; Beleuchtung;
- Unterschiedliche Auskleidungs-Modi oder Verkleidungs-Modi einschalten, ausschalten oder umschalten; hier können beispielsweise Effekte wie Regenwald, Herbstwald oder Winterlandschaft oder Aquarium erzeugt werden oder es wird ein blauer Himmel dargestellt usw.;
- Unterschiedliche Hintergrund-Effekte oder -Modi auf dem zweiten Anzeigebereich 30 können in der Kabine bewegt dargestellt werden. Zum Beispiel kann ein bestimmter Hintergrund-Effekt durch die Kabine wandern. So kann beispielsweise eine Beleuchtung oder ein Herbstblätterwald oder dergleichen nach hinten oder nach vorne wandern gelassen werden, um so beispielsweise das Catering zu begleiten.
- Es kann eine Komplettaußenansicht oder eine Teilaußenansicht hergestellt werden; die Passagiere können so das Gefühl erhalten, sie säßen in einer gläsernen oder einer kristallenen Kabine.
- Es können Notfall-Modi erzeugt werden, beispielsweise wichtige Notfallinformationen wie Pfeile zu den Notausgängen oder dergleichen können dargestellt werden.
- Es können Hinweise oder Informationen für die Passagiere temporär eingeblendet werden.

Sämtliche vorgenannten Funktionen können einzeln oder in Gruppen vorhanden sein und entsprechend in der Steuerung der Displayeinrichtung 24 programmiert und hinterlegt sein.

### Bezugszeichenliste:

10 Passagierkabineneinheit
12 Passagierbereich
14 Passagiersitz
16 Eingang
18 Flugzeughimmel
20 Seitenwand
22 Boden
24 Displayeinrichtung
26 Innenflächen
28 erster Anzeigebereich
30 zweiter Anzeigebereich
32 Passagierbefehlseingabeeinrichtung
40 Interaktive Kabine
42 Interaktive Verkleidung
44 Interaktives Interieur
46 Personalbefehlseingabeeinrichtung
48 Gesonderter Informationsbereich
50 virtuelles Informationsfenster
52 Pfeile
54 Notfall-Leitsystem

## Patentansprüche

1. Passagierkabineneinheit (10) eines Flugzeugs, wobei vom Inneren der Passagierkabineneinheit (10) sichtbare Oberflächen der Passagierkabineneinheit (10), nämlich sichtbare Oberflächen des Flugzeughimmels (18) und der Seitenwände (20), vollflächig oder zum größten Teil mit einer Displayeinrichtung (24) zur Darstellung von visuellen Informationen, Effekten und Bildern versehen sind,
wobei die Displayeinrichtung (24) in mehrere erste Anzeigebereiche (28), die jeweils einzelnen Passagieren oder einer Gruppe von Passagieren zugeordnet sind, und wenigstens einen zweiten Anzeigebereich (30) unterteilt ist, wobei jeder erste Anzeigebereich (28) eine Passagierbefehlseingabeeinrichtung (32) hat, mittels der ein Passagier die visuelle Darstellung auf dem ihm zugeordneten ersten Anzeigebereich (28) steuern kann,
wobei die Passagierkabineneinheit als interaktive Kabine (40) ausgebildet ist, wobei die interaktive Kabine (40) aus einer interaktiven Verkleidung (42) als der zweite Anzeigenbereich (30) und einem interaktiven Interieur (44) gebildet ist, wobei das interaktive Interieur (44) durch die ersten Anzeigebereiche (28) gebildet ist,
wobei die interaktive Verkleidung (42) und das interaktive Interieur (44) unabhängig voneinander ansteuerbar sind,
wobei die interaktive Verkleidung (42) nur durch das Flugpersonal ansteuerbar ist, wobei das interaktive Interieur (44) einerseits durch Passagiere und andererseits durch Flugpersonal ansteuerbar ist,
wobei die durch die einzelnen Passagiere ansteuerbaren ersten Anzeigebereiche (28) das interaktive Interieur (44) im Bereich der Seitenwände (20), die sich nahe der Passagiersitze (14) befinden, bilden,
wobei jeder erste Anzeigebereich (28) einen gesonderten Informationsbereich (48) umfasst,
wobei jeder erste Anzeigebereich (28) derart ausgebildet ist, dass es dem Passagier durch entsprechende Befehle möglich ist, Informationen zwischen seinem gesonderten Informationsbereich (48) vor sich an der Rücklehne des Vordersitzes und seinem Bereich auf dem interaktiven Interieur (44) hin- und herzuschieben,
und wobei wenigstens eine Personalbefehlseingabeeinrichtung (32) vorgesehen ist, mittels der Begleitpersonal die visuelle Darstellung auf mehreren oder allen ersten Anzeigebereichen (28) und auf dem zweiten Anzeigebereich (30) steuern kann.

2. Passagierkabineneinheit (10) nach Anspruch 1,
**dadurch gekennzeichnet,**
**dass** die Passagierbefehlseingabeeinrichtung (32) zur Erfassung von Befehlen durch Berührung, Gesten oder Sprache ausgebildet ist.

3. Passagierkabineneinheit (10) nach Anspruch 2,
**dadurch gekennzeichnet,**
**dass** die erste Anzeigeeinrichtung (28) über ihre gesamte Oberfläche derart interaktiv ausgebildet ist, dass Befehle durch Berührungen oder Annäherungen oder Bewegungen an jedem Flächenbereich der Anzeigeeinrichtung erfassbar sind.

4. Passagierkabineneinheit (10) nach einem der Ansprüche 2 oder 3,
**dadurch gekennzeichnet,**
**dass** jeder erste Anzeigebereich (28) eine Berührungs- oder Bewegungserfassungsfunktionseinrichtung aufweist, die ein Zeichnen oder Malen oder Beschriften des ersten Anzeigebereichs (28) durch Berühren oder Gesten ermöglicht.

5. Passagierkabineneinheit (10) nach einem der voranstehenden Ansprüche, **dadurch gekennzeichnet,**
**dass** sowohl plane als auch gekrümmte Oberflächen vollflächig mit der Displayeinrichtung (24) versehen sind.

6. Passagierkabineneinheit (10) nach einem der voranstehenden Ansprüche,
**dadurch gekennzeichnet,**
**dass** die zentrale Personalbefehlseingabeeinrichtung (46) dazu ausgebildet ist:
a) einen visuellen Oberflächeneindruck in Farbe, Anordnung, Aussehen oder Lichtstärke oder dergleichen an der gesamten Innenwand der Passagierkabineneinheit (10) oder eines Teils davon zentral zu verändern;
und/oder
b) allen oder einem Teil der Passagiere Informationen auf den ersten (28) und/oder den zweiten Anzeigebereichen (30) zu übermitteln, und/oder
c) Signale und/oder Information auf ausgewählten ersten Anzeigebereichen (28) darzustellen.

7. Passagierkabineneinheit (10) nach einem der voranstehenden Ansprüche, **dadurch gekennzeichnet,**
**dass** die Passagierbefehlseingabeeinrichtung (32) dazu ausgebildet ist,
d) im zugeordneten ersten Anzeigebereich (28) ein visuell als Bild dargestelltes Fenster mit einer Außenansicht darzustellen; und/oder
e) im zugeordneten ersten Anzeigebereich (28) ein visuell als Bild dargestelltes Fenster mit einer Außenansicht und eingeblendeter Zusatzinformation darzustellen; und/oder
f) auf dem Anzeigebereich (28) einen Hintergrundeffekt aus mehreren Optionen ausgewählt darzustellen;
g) insbesondere durch Berühren oder Gesten Skizzen oder Zeichnungen oder Gemälde zu erstellen.

8. Passagierkabineneinheit (10) nach einem der voranstehenden Ansprüche, **dadurch gekennzeichnet,**
**dass** die ersten Anzeigebereiche (28) an Oberflächen unmittelbar vor und neben Passagiersitzen (14) angeordnet sind und
**dass** der zweite Anzeigebereich (30) durch die verbleibenden Oberflächen an Seitenwänden (20) und den Deckenbereich gebildet ist.

9. Passagierkabineneinheit (10) nach einem der voranstehenden Ansprüche,
**dadurch gekennzeichnet,**
**dass** die Displayeinrichtung (24) derart ausgebildet ist, dass Befehle der Personalbefehlseingabeeinrichtung (46) immer höherrangig als Befehle der Passagierbefehlseingabeeinrichtungen (32) behandelt werden.

10. Passagierkabineneinheit nach einem der voranstehenden Ansprüche, **dadurch gekennzeichnet,**
**dass** die Displayeinrichtung (24) dazu ausgebildet ist, durch das Personal so angesteuert zu werden, dass auf ersten und/oder zweiten Anzeigebereichen (28, 30) Notfall-Informationen, Pfeile (52), Fluchtwege oder Rettungspfade angezeigt werden, um Personen zu den nächstliegenden Notausgängen zu leiten.

11. Verfahren zum Darstellen von visuellen Effekten, Informationen und Bildern zur Unterhaltung und/oder Information von Passagieren eines Flugzeugs, mit:
Darstellen von visuellen Informationen, Effekten und Bildern auf einer Displayeinrichtung (24), die vollflächig oder zum größten Teil auf vom Inneren der Passagierkabineneinheit (10) sichtbaren Oberflächen einer Passagierkabineneinheit (10), nämlich sichtbaren Oberflächen des Flugzeughimmels (18) und der Seitenwände (20), bereitgestellt wird;
Unterteilen der Displayeinrichtung (24) in mehrere erste interaktive Anzeigebereiche (28), die jeweils einzelnen Passagieren oder einer Gruppe von Passagieren zugeordnet werden und einzeln durch die zugeordneten Passagiere interaktiv ansteuerbar sind, und in zweite Anzeigebereiche (30);
Steuern der ersten Anzeigebereiche (28) über an den ersten Anzeigebereichen (28) vorgesehenen Berührungs-, Gesten- oder Spracherfassungseinrichtungen durch die einzelnen Passagiere, und
Steuern der ersten Anzeigebereiche (28) und des zweiten Anzeigebereichs (30) durch Bedienpersonal,
Ausbilden der Passagierkabineneinheit (10) als interaktive Kabine (40), wobei die interaktive Kabine (40) aus einer interaktiven Verkleidung (42) als der zweite Anzeigenbereich (30) und einem interaktiven Interieur (44) gebildet ist,
wobei das interaktive Interieur (44) durch die ersten Anzeigebereiche (28) gebildet ist, wobei die interaktive Verkleidung (42) und das interaktive Interieur (44) unabhängig voneinander ansteuerbar sind, wobei die interaktive Verkleidung (42) nur durch das Flugpersonal ansteuerbar ist, wobei das interaktive Interieur (44) einerseits durch Passagiere und andererseits durch Flugpersonal ansteuerbar ist,
wobei die durch die einzelnen Passagiere ansteuerbaren ersten Anzeigebereiche (28) das interaktive Interieur (44) im Bereich der Seitenwände (20), die sich nahe der Passagiersitze (14) befinden, bilden, wobei jeder erste Anzeigebereich (28) einen gesonderten Informationsbereich (48) umfasst,
wobei es dem Passagier durch entsprechende Befehle möglich ist, Informationen zwischen seinem gesonderten Informationsbereich (48) vor sich an der Rücklehne des Vordersitzes und seinem Bereich auf dem interaktiven Interieur (44) hin- und herzuschieben.

12. Verfahren nach Anspruch 11,
**gekennzeichnet durch**
Verwenden der Displayeinrichtung (24) als Leitsystem zur Darstellung von Fluchtpfaden oder Rettungswegen auf ersten und/oder zweiten Anzeigebereichen, um die Passagiere zu den jeweils nächstliegenden Notausgängen zu leiten.

## Claims

1. Passenger cabin unit (10) of an aircraft, wherein surfaces of the passenger cabin unit (10) which are visible from inside the passenger cabin unit (10), namely visible surfaces of the aircraft roof lining (18) and of the side walls (20), are completely or substantially provided with a display device (24) for presenting visual information, effects and images,
wherein the display device (24) is divided into a plurality of first display regions (28), which are each assigned to individual passengers or to a group of passengers, and at least one second display region (30),
wherein each first display region (28) has a passenger command input device (32) which can be used by a passenger to control the visual presentation on the first display region (28) assigned to said passenger,
wherein the passenger cabin unit is in the form of an interactive cabin (40),
wherein the interactive cabin (40) is formed from an interactive lining (42) as the second display region (30) and an interactive interior (44),
wherein the interactive interior (44) is formed by the first display regions (28),
wherein the interactive lining (42) and the interactive interior (44) are controllable independently of one another,
wherein the interactive lining (42) is controllable only by the cabin crew,
wherein the interactive interior (44) is controllable by passengers, on the one hand, and by cabin crew, on the other hand,
wherein the first display regions (28) which are controllable by the individual passengers form the interactive interior (44) in the region of the side walls (20) which are close to the passenger seats (14), wherein each first display region (28) comprises a separate information region (48),
wherein each first display region (28) is configured in such a manner that it is possible for the passenger, by means of appropriate commands, to shift information back and forth between the passenger's separate information region (48) in front of the passenger on the backrest of the seat in front and the passenger's region on the interactive interior (44),
and wherein at least one crew command input device (32) is provided and can be used by attendants to control the visual presentation on a plurality or all of the first display regions (28) and on the second display region (30).

2. Passenger cabin unit (10) according to Claim 1,
**characterized**
**in that** the passenger command input device (32) is configured to detect commands by means of touch, gestures or speech.

3. Passenger cabin unit (10) according to Claim 2,
**characterized**
**in that** the first display device (28) is configured to be interactive over the entire surface thereof such that commands are detectable by means of touches or approaches or movements on every surface region of the display device.

4. Passenger cabin unit (10) according to either of Claims 2 and 3,
**characterized**
**in that** each first display region (28) has a touch or movement detection functional device which enables drawing or painting or writing on the first display region (28) by means of touching or gestures.

5. Passenger cabin unit (10) according to one of the preceding claims,
**characterized**
**in that** both flat and curved surfaces are completely provided with the display device (24).

6. Passenger cabin unit (10) according to one of the preceding claims,
**characterized**
**in that** the central crew command input device (46) is configured to:
a) centrally change a visual surface impression in colour, arrangement, appearance or light intensity or the like on the entire interior wall of the passenger cabin unit (10) or a part thereof;
and/or
b) transmit information to all or some of the passengers on the first (28) and/or the second display regions (30), and/or
c) present signals and/or information on selected first display regions (28).

7. Passenger cabin unit (10) according to one of the preceding claims,
**characterized**
**in that** the passenger command input device (32) is configured to
d) present, in the assigned first display region (28), a window with an outside view visually presented as an image; and/or
e) present, in the assigned first display region (28), a window with an outside view and superimposed additional information visually presented as an image; and/or
f) present, on the display region (28), a background effect selected from a plurality of options;
g) create sketches or drawings or paintings, in particular by means of touching or gestures.

8. Passenger cabin unit (10) according to one of the preceding claims,
**characterized**
**in that** the first display regions (28) are arranged on surfaces immediately in front of and adjacent to passenger seats (14), and
**in that** the second display region (30) is formed by the remaining surfaces on side walls (20) and the ceiling region.

9. Passenger cabin unit (10) according to one of the preceding claims,
**characterized**
**in that** the display device (24) is configured in such a manner that higher priority is always given to commands of the crew command input device (46) than to commands of the passenger command input devices (32).

10. Passenger cabin unit according to one of the preceding claims,
**characterized**
**in that** the display device (24) is configured to be controlled by the crew in such a manner that emergency information, arrows (52), escape or rescue routes are displayed on first and/or second display regions (28, 30) in order to guide people to the nearest emergency exits.

11. Method for presenting visual effects, information and images in order to entertain and/or inform passengers of an aircraft, comprising:
presenting visual information, effects and images on a display device (24) which is completely or substantially provided on surfaces of a passenger cabin unit (10) which are visible from inside the passenger cabin unit (10), namely visible surfaces of the aircraft roof lining (18) and of the side walls (20);
dividing the display device (24) into a plurality of first interactive display regions (28), which are each assigned to individual passengers or to a group of passengers and are individually interactively controllable by the assigned passengers, and second display regions (30);
controlling the first display regions (28), by the individual passengers, by way of touch, gesture or speech capture devices provided on the first display regions (28), and
controlling the first display regions (28) and the second display region (30) by operating crew,
forming the passenger cabin unit (10) as an interactive cabin (40), wherein the interactive cabin (40) is formed from an interactive lining (42) as the second display region (30) and an interactive interior (44),
wherein the interactive interior (44) is formed by the first display regions (28), wherein the interactive lining (42) and the interactive interior (44) are controllable independently of one another, wherein the interactive lining (42) is controllable only by the cabin crew, wherein the interactive interior (44) is controllable by passengers, on the one hand, and by cabin crew, on the other hand, wherein the first display regions (28) controllable by the individual passengers form the interactive interior (44) in the region of the side walls (20) which are close to the passenger seats (14), wherein each first display region (28) comprises a separate information region (48),
wherein it is possible for the passenger, by means of appropriate commands, to shift information back and forth between the passenger's separate information region (48) in front of the passenger on the backrest of the seat in front and the passenger's region on the interactive interior (44).

12. Method according to Claim 11,
**characterized by**
using the display device (24) as a guidance system for presenting escape or rescue routes on first and/or second display regions in order to guide the passengers to the nearest emergency exits in each case.

## Revendications

1. Cabine passagers (10) d'un aéronef, dans laquelle des surfaces de la cabine passagers (10) visibles de l'intérieur de la cabine passagers (10), à savoir des surfaces visibles du plafond de l'aéronef (18) et des parois latérales (20), sont pourvues, sur la totalité de la surface ou en majeure partie, d'un dispositif d'affichage (24) destiné à représenter visuellement des informations, des effets et des images,
dans laquelle le dispositif d'affichage (24) est divisé en une pluralité de premières zones d'affichage (28) qui sont respectivement associées à des passagers individuels ou à un groupe de passagers, et au moins une deuxième zone d'affichage (30), dans laquelle chaque première zone d'affichage (28) comporte un dispositif d'entrée de commande de passager (32) au moyen duquel un passager peut commander l'affichage visuel sur la première zone d'affichage (28) qui lui est associée,
dans laquelle la cabine passagers est réalisée sous la forme d'une cabine interactive (40),
dans laquelle la cabine interactive (40) est constituée d'un revêtement interactif (42) en tant que deuxième zone d'affichage (30) et d'un intérieur interactif (44), dans laquelle l'intérieur interactif (44) est constitué par les premières zones d'affichage (28),
dans laquelle le revêtement interactif (42) et l'intérieur interactif (44) peuvent être commandés indépendamment l'un de l'autre,
dans laquelle le revêtement interactif (42) ne peut être commandé que par le personnel navigant,
dans laquelle l'intérieur interactif (44) peut être commandé d'une part par les passagers et d'autre part par le personnel navigant,
dans laquelle les premières zones d'affichage (28), qui peuvent être commandées par les passagers individuels, constituent l'intérieur interactif (44) dans la zone des parois latérales (20) qui sont situées à proximité des sièges passagers (14),
dans laquelle chaque première zone d'affichage (28) comprend une zone d'information distincte (48),
dans laquelle chaque première zone d'affichage (28) est conçue pour permettre au passager, par des commandes correspondantes, d'échanger des informations entre sa zone d'information distincte (48), qui est située devant lui sur le dossier du siège avant, et sa zone qui est située sur l'intérieur interactif (44) ;
et dans laquelle il est prévu au moins un dispositif d'entrée de commande de personnel (32) au moyen duquel le personnel de bord peut commander la représentation visuelle sur une pluralité ou sur la totalité des premières zones d'affichage (28) et sur la deuxième zone d'affichage (30).

2. Cabine passagers (10) selon la revendication 1, **caractérisée en ce que** le dispositif d'entrée de commande de passager (32) est conçu pour détecter des commandes tactiles, gestuelles ou vocales.

3. Cabine passagers (10) selon la revendication 2, **caractérisée en ce que** le premier dispositif d'affichage (28) est conçu pour être interactif sur la totalité de sa surface, de manière à ce que des commandes puissent être détectées par de manière tactile ou par des rapprochements ou des mouvements sur chaque zone de surface du dispositif d'affichage.

4. Cabine passagers (10) selon l'une des revendications 2 ou 3,
**caractérisée en ce que** chaque première zone d'affichage (28) comporte un dispositif à fonction de détection tactile ou de mouvement permettant de réaliser de manière tactile ou gestuelle un dessin ou des peintures ou des inscriptions sur la première zone d'affichage (28).

5. Cabine passagers (10) selon l'une des revendications précédentes,
**caractérisée en ce que** le dispositif d'affichage (24) est pourvu sur la totalité de sa surface de surfaces aussi bien planes qu'incurvées.

6. Cabine passagers (10) selon l'une des revendications précédentes,
**caractérisée en ce que** le dispositif d'entrée de commande de personnel (46) est conçu pour :
a) modifier de manière centralisée une impression visuelle superficielle de couleur, d'agencement, d'aspect ou d'intensité lumineuse ou autre, sur la totalité ou sur une partie de la paroi intérieure de la cabine passagers (10) ; et/ou
b) transmettre des informations à la totalité ou à une partie des passagers sur la première (28) et/ou sur la deuxième (30) zone d'affichage, et/ou
c) afficher des signaux et/ou des informations sur des premières zones d'affichage (28) sélectionnées.

7. Cabine passagers (10) selon l'une des revendications précédentes, **caractérisée en ce que** le dispositif d'entrée de commande de passager (32) est conçu pour :
d) représenter, dans la première zone d'affichage (28) associée, une fenêtre représentée visuellement sous la forme d'une image présentant une vue de l'extérieur ;
et/ou
e) représenter, dans la première zone d'affichage (28) associée, une fenêtre représentée visuellement sous la forme d'une image présentant de manière superposée une vue de l'extérieur et des informations supplémentaires, et/ou
f) représenter sur la zone d'affichage (28) un effet d'arrière-plan sélectionné parmi une pluralité d'options ;
g) réaliser plus particulièrement de manière tactile ou gestuelle des esquisses ou des dessins ou des peintures.

8. Cabine passagers (10) selon l'une des revendications précédentes, **caractérisée**
**en ce que** les premières zones d'affichage (28) sont disposées sur des surfaces situées directement devant et à côté des sièges passagers (14) et
**en ce que** la deuxième zone d'affichage (30) est constituée par les surfaces restantes des parois latérales (20) et de la zone de plafond.

9. Cabine passagers (10) selon l'une des revendications précédentes,
**caractérisée en ce que** le dispositif d'affichage (24) est conçu de manière à ce que des commandes provenant du dispositif d'entrée de commandes du personnel (46) soient toujours traitées à un niveau supérieur aux commandes des dispositifs de commande de passagers (32).

10. Cabine passagers selon l'une des revendications précédentes,
**caractérisée en ce que** le dispositif d'affichage (24) est conçu pour être commandé par le personnel de manière à ce que des informations d'urgence, des flèches (52), des couloirs d'évacuation ou des trajets de sauvetage soient affichés sur des premières et/ou des deuxièmes zones d'affichage (28, 30) afin de guider les personnes vers les issues de secours les plus proches.

11. Procédé d'affichage d'effets visuels, d'informations et d'images pour le divertissement et/ou l'information des passagers d'un aéronef, comprenant :
l'affichage visuel d'informations, d'effets et d'images sur un dispositif d'affichage (24) qui est prévu sur la totalité de la surface ou en majeure partie sur des surfaces d'une cabine passagers (10) qui sont visibles depuis l'intérieur de la cabine passagers (10), à savoir des surfaces visibles du plafond de l'aéronef (18) et des parois latérales (20) ;
la division du dispositif d'affichage (24) en une pluralité de premières zones d'affichage interactives (28) qui sont respectivement associées à des passagers individuels ou à un groupe de passagers et peuvent être commandées individuellement de manière interactive par les passagers associés, et en des deuxièmes zones d'affichage (30) ;
la commande des premières zones d'affichage (28) par les passagers individuels au moyen de dispositifs de détection tactiles, gestuels ou vocaux prévus sur les premières zones d'affichage (28), et
la commande des premières zones d'affichage (28) et de la deuxième zone d'affichage (30) par le personnel opérateur,
la réalisation de la cabine passagers (10) sous la forme d'une cabine interactive (40), dans lequel la cabine interactive (40) est constituée d'un revêtement interactif (42) en tant que deuxième zone d'affichage (30) et d'un intérieur interactif (44),
dans lequel l'intérieur interactif (44) est constitué par les premières zones d'affichage (28), dans lequel le revêtement interactif (42) et l'intérieur interactif (44) peuvent être commandés indépendamment l'un de l'autre,
dans lequel le revêtement interactif (42) ne peut être commandé que par le personnel navigant, dans lequel l'intérieur interactif (44) peut être commandé d'une part par les passagers et d'autre part par le personnel navigant, dans lequel les premières zones d'affichage (28), qui peuvent être commandées par les passagers individuels, constituent l'intérieur interactif (44) dans la zone des parois latérales (20) qui sont situées à proximité des sièges passagers (14), dans lequel chaque première zone d'affichage (28) comprend une zone d'information distincte (48),
dans lequel il est possible au passager, par des commandes correspondantes, d'échanger des informations entre sa zone d'information distincte (48), qui est située devant lui sur le dossier du siège avant, et sa zone qui est située sur l'intérieur interactif (44).

12. Procédé selon la revendication 11,
**caractérisé par** l'utilisation du dispositif d'affichage (24) comme système de guidage pour l'affichage de couloirs d'évacuation ou de trajets de sauvetage sur des premières et/ou deuxièmes zones d'affichage afin de guider les passagers vers les issues de secours respectives les plus proches.
